# EUROPEAN PATENT APPLICATION

(11) **EP 4 779 223 A1**
(43) Date of publication of application: **22.07.2026**
(21) Application number: 25152358.5
(22) Date of filing: 16.01.2025
(51) Int. Cl.: F24F 11/70, F24F 12/00, F24F 13/28, F28F 27/02

(54) **HEAT EXCHANGER SYSTEM**

(71) Applicant: Ubbink B.V., 6984 AA Doesburg (NL)
(72) Inventor: BRAAD, Jan Henk, 6984 AA Doesburg (NL)
(74) Representative: van Dam, Vincent

(57) **Abstract**

The present invention relates to a heat exchanger system for use in a building ventilation system and to a building ventilation system comprising said heat exchanger system. The invention also relates to a building comprising said building ventilation system. The invention also relates to a filter element, for use in the abovementioned heat exchanger system, wherein the filter element is configured for removable insertion into said heat exchanger system.

## Description

The present invention relates to a heat exchanger system for use in a building ventilation system and to a building ventilation system comprising said heat exchanger system. The invention also relates to a building comprising said building ventilation system. The invention also relates to a filter element for use in the abovementioned heat exchanger system, wherein the filter element is configured for removable insertion into said heat exchanger system.

Heat exchanger systems and building ventilation systems incorporating said heat exchanger systems are used to recover heat from air extracted from an inner space of a building by transferring heat from the extract air to outdoor air that is introduced into the building.

The action of such ventilation systems is typically based on a heat exchanger installed at a crossing point of a first and second air passage which both have an air inlet and air outlet and which are configured in such a relation with the heat exchanger that the first and second air passage are in a heat exchanging relation with each other.

Typically, heat exchange system used in this context comprise a bypass in the air flow passage between the extract air connection and the exhaust air connection to allow the extract air to bypass the heat exchanger. In general, this bypass functions as a means to provide natural air flow between the inside and outside of a building, basically functionally similar to opening a window.

It is crucial for maintaining a healthy and comfortable indoor environment that a ventilation system is well-maintained. For instance, ventilation systems may accumulate dust, debris, and other contaminants in the course of time. This may reduce air quality in the building. In addition, such accumulations may reduce the efficiency of the ventilation system.

Therefore, it is important that the system is cleaned and maintained regularly to ensure optimal performance and avoid potential health hazards. An important aspect in this regard are the air filters which require regular replacement.

In order to ensure efficient and error-free maintenance, there is a need for systems where components requiring maintenance, such as air filters, can be installed and replaced as easily and foolproof as possible.

### Summary of the invention

The present invention aims to provide a heat exchange system comprising wherein air filters can be installed and replaced in a very easy manner, so that maintenance can be performed without extensive knowledge of the system.

In a first aspect according to the invention this objective is achieved by the provision of a heat exchanger system for use in a building ventilation system, comprising a first main flow passage having a first air connection on one end of the first main flow passage and a second air connection on the other end of the first main flow passage, said first main flow passage being bounded by a wall; a second main flow passage having a first air connection on one end of the second main flow passage and a second air connection on the other end of the second main flow passage, said second main flow passage being bounded by a wall; a heat exchanger unit by means of which a part of the first main flow passage and part of the second main flow passage are in heat exchanging relationship with each other; a first bypass flow passage with a first end branching from the first main flow passage at a first position up or downstream of the heat exchanger unit and a second end debouching back into the first main flow passage at a second, opposite position of the heat exchanger unit, said first bypass flow passage being bounded by a wall; means for regulating flow via the first main flow passage through the heat exchanger unit and for regulating flow through the first bypass flow passage; wherein at least at one position up or downstream of the heat exchanger unit said first main flow passage and said first bypass flow passage extend for at least a portion adjacent to each other; and wherein in such a portion wherein said first main flow passage and said first bypass flow passage extend adjacent to each other, said portion comprises a first opening in the wall of the first main flow passage and/or the wall of the first bypass flow passage and a second opening opposite to the first opening and between said first main flow passage and said first bypass flow passage to allow removable insertion of a first filter element through the cross-section of both the first main flow passage and said first bypass flow passage.

In a second aspect, the invention relates to a heat exchange ventilation system for use in a building comprising the heat exchanger system according to the first aspect.

In a third aspect, the invention relates to a building comprising the heat exchange ventilation system according to the second aspect.

In a fourth aspect, the invention relates to a filter element for use in the heat exchanger system according to the first aspect, wherein the filter element is configured for removable insertion into said heat exchanger system through the cross-section of both said first main flow passage and said bypass flow passage via said first and second opening and for filtering air flowing through the first main flow passage and air flowing through the bypass flow passage; and wherein the filter element comprises a first portion configured to fit the cross-section of the first main flow passage and a second portion configured to fit the cross-section of the bypass flow passage, and wherein the first and second portion are separated by a seal portion configured to seal the second opening between said first main flow passage and said bypass flow passage when the first filter element is inserted.

### Short description of the drawings

Fig. 1 A-D shows a very schematic representation of the heat exchanger system according to the invention in different modes.
Fig. 2 A-E shows an exemplary heat exchanger system according to the invention in different representations.
Fig. 3 A-B shows how an exemplary embodiment of a filter according to the invention is installed in an exemplary heat exchanger system.
Fig. 4 shows an exemplary embodiment of the filter element according to the invention.

### Detailed description of the invention

The present invention is based on the use of a filter element in a heat exchanger system that makes use of a bypass flow passage bypassing a main flow passage, wherein the filter element is designed as a single filter element for insertion in both the main flow passage as well as this bypass flow passage and functioning as an air filter in both these flow passages.

The filter element can be easily and removably inserted through the cross-section of both said main flow passage and said bypass flow passage and may accordingly be easily installed and removed for maintenance.

The heat exchanger system may suitably be used as a heat recovery system. This is an energy recovery system that uses an air-to-air heat exchanger unit recovering wasted heat to supply fresh and filtered air to an indoor environment. In this respect the heat exchanger system according to the invention may also be referred to as a heat recovery system.

The heat exchanger system in accordance with the invention comprises a first main flow passage having a first air connection on one end of the first main flow passage and a second air connection on the other end of the first main flow passage, said first main flow passage being bounded by a wall; a second main flow passage having a first air connection on one end of the second main flow passage and a second air connection on the other end of the second main flow passage, said second main flow passage being bounded by a wall; a heat exchanger unit by means of which a part of the first main flow passage and part of the second main flow passage are in heat exchanging relationship with each other; a first bypass flow passage with a first end branching from the first main flow passage at a first position up or downstream of the heat exchanger unit and a second end debouching back into the first main flow passage at a second, opposite position of the heat exchanger unit, said first bypass flow passage being bounded by a wall; and means for regulating flow via the first main flow passage through the heat exchanger unit and for regulating flow through the first bypass flow passage. Heat exchanger systems of this type are in general known in the art and the heat exchanger system according to the invention may comprise any suitable elements and parts know in the art, based on considerations that are well-known to the skilled person.

The direction of flow in the first and second main flow passage when the heat exchanger system is in function depends on the intended purpose and the way the heat exchanger system is installed in the heat exchange ventilation system in a building.

In this respect, it is noted that depending on the installation configuration plan, a building requires a left- or right-sided ventilation system. Because manufacturing specific left- or right-sided ventilation systems increases the scale of production and the size of stock to manage on the manufacturer, it is preferred that a heat exchange system is designed such that it may be used as a left- or right-sided system without the need to reconstruct or change the configuration of the system. The heat exchanger system according to the invention allows such a design, because the flow direction between the first and second main flow passage may suitably be reversed by taking appropriate measures that allows for regulation of the direction of flow. For this purpose, the heat exchanger system may suitably comprise a controller configured for controlling the flow direction of the first and second main flow passage. This may be realized using suitable software. This way, the direction of flow of air inward or outward the building via the heat exchanger system in each main flow channel may be changed when desired.

In other words, in the context of the terms "first main flow passage" and "second main flow passage", the system may be installed such that the first main flow passage passes extract air from inside the building to the outside of the building and the second main flow passage introduces outdoor air from outside the building into the building. Alternatively, the system may be installed such that the second main flow passage passes extract air from inside the building to the outside of the building and the first main flow passage introduces outdoor air from outside the building into the building.

The first bypass flow passage is configured to bypass the heat exchanger unit. The term "heat exchanger unit" relates to a unit in which heat is functionally exchanged, whereas the term heat exchanger system relates to the system in broader sense, i.e. further comprising any other functional components such as flow passages, fans, etc. It is also noted that the heat exchanger unit in this regard may comprise the functional heat exchanging components as well as any suitable structural components that can be considered as part of this unit and which may be required or desirable for installation and proper functioning in the overall heat exchanger system.

In principle, it is sufficient that the first bypass flow passage in the heat exchanger system just functions as a means to allow natural air flow between the inside and outside of a building, basically similar to opening a window in a building, albeit that its flow may be regulated and/or enhanced, preferably by using a fan or other air flow driving means such as a fan that also drives the air flow in the respective bypassed air passage. Thus, in that respect it functions the same regardless of the orientation of installation of the heat exchanger system in the building. This contributes to easy installation of the heat exchanger system in a building.

The opening and closing of the first main flow passage and first bypass flow passage may be effected by any suitable element or combination of elements, including one or more valves. It is preferred that means for regulating flow via the first main flow passage through the heat exchanger unit and for regulation flow through the first bypass comprise one or more valve configured for opening and closing the first main flow passage as well as for opening and closing the first bypass flow passage. This can be done for instance by using a single valve pivoting around an axis and configured to close the first main flow passage in one position and to close the first bypass flow passage in a second position. This allows using a single control mechanism that only has to control the position of a single valve.

Likewise, controllers may be used to regulate flow through the flow channels of the system or to control any other parameters that require regulation.

It noted that although it is not required for purposes of the present invention, it is possible to provide also the second main flow passage with a second bypass flow passage with a first end branching from the second main flow passage at a first position up or downstream of the heat exchanger unit and a second end debouching back into the second main flow passage at a second, opposite position of the heat exchanger unit, wherein also this second bypass flow passage is bounded by a wall. This second bypass flow passage is also configured to bypass the heat exchanger unit. Such a configuration may allow for further regulation of flow parameters.

Likewise, any standard parts may be incorporated in the heat exchanger system. Such parts, including without limitation controllers, flow regulators, motors, displays etc., may in principle chosen amongst the ones known and commercially available to the skilled person, and their configuration may be designed in accordance with principles known to the person skilled in the art of heat exchanger systems.

As mentioned above, in accordance with the present invention a single filter element can be inserted as a first filter element in both the first main flow passage as well as this bypass flow passage. Because the first filter element may be provided as a disposable element, the present invention is meant to encompass both a heat exchanger system specially designed for insertion of the first filter element, but without the first filter element actually inserted therein, as well as the heat exchanger system with the filter element inserted therein. When the first filter element is inserted in the heat exchanger system, the first filter element is removably provided by insertion through the cross-section of both the first main flow passage and said first bypass flow passage via said first and second opening and configured to filter air flowing through the first main flow passage and/or air flowing through the first bypass flow passage. For this purpose, said first main flow passage and said first bypass flow passage extend for at least a portion adjacent to each other at least on one position up or downstream of the heat exchanger unit. This allows insertion of a filter element from one point of insertion at the outside of the heat exchanger system to allow the first filter element to extend through both the cross-sections of the first main flow passage and the first bypass flow passage.

The first and second openings for insertion of the filter element are in a suitable embodiment realized as slits in the respective walls. Nevertheless, any other suitable shape of opening may also be considered and encompassed in the scope of the invention.

Preferably, said first main flow passage and said first bypass flow passage extend for at least a portion adjacent and parallel to each other. This benefits compactness of the system and allows optimal ease of insertion of the first filter element.

In the portion wherein said first main flow passage and said first bypass flow passage extend adjacent and preferably parallel to each other, this portion comprises a first opening in the wall of the first main flow passage and/or the wall of the bypass flow passage and a second opening opposite to the first opening and between said first main flow passage and said first bypass flow passage to allow removable insertion of the first filter element as a single filter element through the cross-section of both the first main flow passage and said first bypass flow passage.

The first opening in this regard should be an opening that can be accessed easily from the outside of the heat exchanger system, for instance after removal of a cover panel, so as to allow insertion of the first filter element without the need for further steps of disassembly of the system.

Depending on the specific design of the heat exchanger system, the first opening may be provided in the wall of the first main flow passage if this allows easy access, for instance if this wall faces a side of the heat exchanger system that is accessible to the user.

Alternatively, the first opening may be provided in the wall of the first bypass flow passage if this allows easy access, for instance if this wall faces a side of the heat exchanger system that is accessible to the user.

In a practical embodiment the first opening is provided in the wall of the first main flow passage facing a side of the heat exchanger system that is accessible to the user. This may be preferred because the first main flow passage will normally have a larger diameter than the first bypass flow passage. Inserting the filter into the wall of the first main flow passage to extend will then facilitate proper insertion so that the filter element extends through the full cross-sections of both the first main flow passage and the first bypass flow passage.

Also for purposes of ease of insertion, it is preferred that in the portion wherein said first main flow passage and said bypass flow passage extend adjacent to each other, the walls of the first main flow passage and the first bypass flow passage abut each other or otherwise form a shared wall portion.

In this respect, it may be preferred that in said portion wherein said first main flow passage and said bypass flow passage extend adjacent to each other the walls of the first main flow passage and the first bypass flow passage in said portion abut each other to form an abutted wall portion and wherein said second opening is provided in said shared wall portion.

It is even more preferable that in said portion wherein said first main flow passage and said bypass flow passage extend adjacent to each other the walls of the first main flow passage and the first bypass flow passage are formed by a common wall portion separating the first main flow passage from the first bypass flow passage, wherein said second opening is provided in said common wall. In a practical embodiment, this may be a single layered common wall.

In order to avoid leakage of air at the position (s) where the filter element crosses a wall, it may be preferred that seals are provided.

In this respect it is preferred to seal at least the second opening between said first main flow passage and said first bypass flow passage through which the filter element extends. To this end, it is preferred that the filter element is provided with at least one seal portion. Accordingly, in a preferred embodiment the first filter element comprises a first portion configured to fit the cross-section of the first main flow passage and a second portion configured to fit the cross-section of the first bypass flow passage, and wherein the first and second portion are separated by a seal portion configured to seal the second opening between said first main flow passage and said first bypass flow passage when the first filter element is inserted.

It is preferred that the cross-sections of the first main flow passage and the bypass flow passage are dimensioned differently, such that the dimensions of the flow passage the most distance from the position of insertion of the first filter element are smaller than the dimensions of the flow passage closer to the position of insertion of the first filter element. In this case, the dimensions of the filter element are configured accordingly to fit the cross-sections of the differently dimensioned first main flow passage and first bypass flow passage. In other words, the dimensions of the filter element at the most distance from the position of insertion are smaller than the dimensions of the flow passage closer to the position of insertion of the first filter element. The dimensions may in this regard relate to the dimension in the direction of insertion and/or to the dimension perpendicular to the direction of insertion.

In a practical embodiment this means that in the portion of the first filter element at the most distance from the position of insertion at least the size of the first filter element in the direction perpendicular to the direction of insertion is smaller than the size in the direction orthogonal to the direction of insertion of the other portion of the filter element, i.e. the portion of the first filter element that is closer to the position of insertion. This ensures fool proof insertion, because the filter element can only be inserted in one orientation.

In another practical embodiment the portion of the first filter element at the most distance from the position of insertion the size of the first filter element in the direction of insertion is smaller than the size in the direction of insertion of the other portion of the filter element, i.e. the portion of the first filter element that is closer to the position of insertion. This is in particular desirable if the filter element is inserted via a first opening in the wall of the first main flow passage, because the diameter of the first main flow passage is in general often larger than that of its bypass flow passage.

In another practical embodiment therefore, in the portion of the first filter element at the most distance from the position of insertion (preferably the portion intended to filter the first bypass flow passage) the size of the first filter element in the direction perpendicular to the direction of insertion as well as the size in the direction of insertion are smaller than the sizes in the respective directions of the other portion of the filter element, i.e. the portion of the first filter element that is closer to the position of insertion (preferably the portion intended to filter the first main flow passage).

Normally, it is desirable that also the second main flow passage is provided with a filter. For this purpose, an opening in the wall of the second main flow passage may be provided to allow removable insertion of a second filter element through the cross-section of the second main flow passage. Because the second filter element may just like the first filter element be provided as a disposable element, the present invention is meant to encompass both a heat exchanger system specially designed for insertion of the second filter element, but without the second filter element actually inserted therein, as well as the heat exchanger system with the filter element inserted therein. In this respect said second filter element may be present removably inserted in said opening in the wall of the second main flow passage and configured to filter air flowing through the second main flow passage.

In a practical embodiment said opening in the wall of the second main flow passage to allow removable insertion of a second filter element through the cross-section of both the second main flow passage is provided at a position with respect to the heat exchanger unit that is opposite from said openings for insertion of the first filter element. This is however not necessary.

The second filter element may be different in design than the first filter element. This for instance the case if the second main flow passage is not provided with a bypass flow channel, because the filter element only has to extend through the cross-section of the second main flow passage. The second filter element may also be identical to the first filter element. For this purpose, a recess may be provided in the wall of the second main flow passage opposite to the position of insertion, so that the second filter element rests in this recess. This allows to use of a single design of filter element in the heat exchanger system.

In case the second main flow passage is provided with a second bypass flow channel, the second filter element and the openings in the second main flow passage and second bypass flow channel and their respective interrelations may be in accordance with the teachings and considerations for the first main flow channel, first bypass flow channel and first filter element. In this case these teachings apply mutatis mutandis to the configuration of the second filter element in respect of the second main flow passage and a second bypass flow channel.

Further objectives, features and advantages of the heat exchange system according to the present invention will be apparent from the description below and the appended drawings.

### Detailed description of the drawings

The present invention will now be described with respect to particular embodiments and with reference to the appended drawings but the invention is not limited thereto. The drawings described are only schematic and are nonlimiting. The dimensions and the relative dimensions do not necessarily correspond to the actual situation when the invention is put to practice.

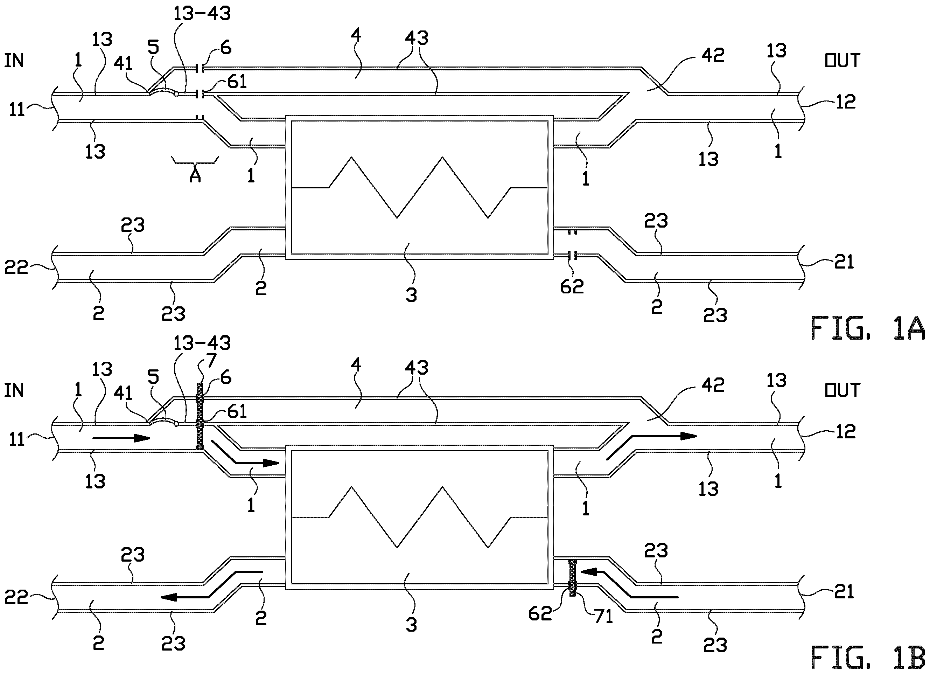

Fig. 1 A-D shows a very schematic representation of the heat exchanger system according to the invention in different modes.

Herein, the heat exchanger system comprises a first main flow passage 1 having a first air connection 11 on one end of the first main flow passage 1 and a second air connection 12 on the other end of the first main flow passage 1. The first main flow passage 1 is bounded by a wall 13.

The heat exchanger system also has a second main flow passage 2 having a first air connection 21 on one end of the second main flow passage 2 and a second air connection 22 on the other end of the second main flow passage. The second main flow passage 2 is bounded by a wall 23.

The air connections suitably connect the heat exchanger system with the parts of a heat exchange ventilation system for use in a building or serve directly as inlet/outlet, depending on the design thereof.

The heat exchanger system also comprises a heat exchanger unit 3 by means of which a part of the first main flow passage 1 and part of the second main flow passage 2 are in heat exchanging relationship with each other.

The heat exchanger system also comprises a bypass flow passage 4 with a first 41 end branching from the first main flow passage 1 at a first position up or downstream of the heat exchanger unit 3 and a second end 42 debouching back into the first main flow passage 1 at a second, opposite position of the heat exchanger unit 3. The bypass flow passage 4 is bounded by a wall 43.

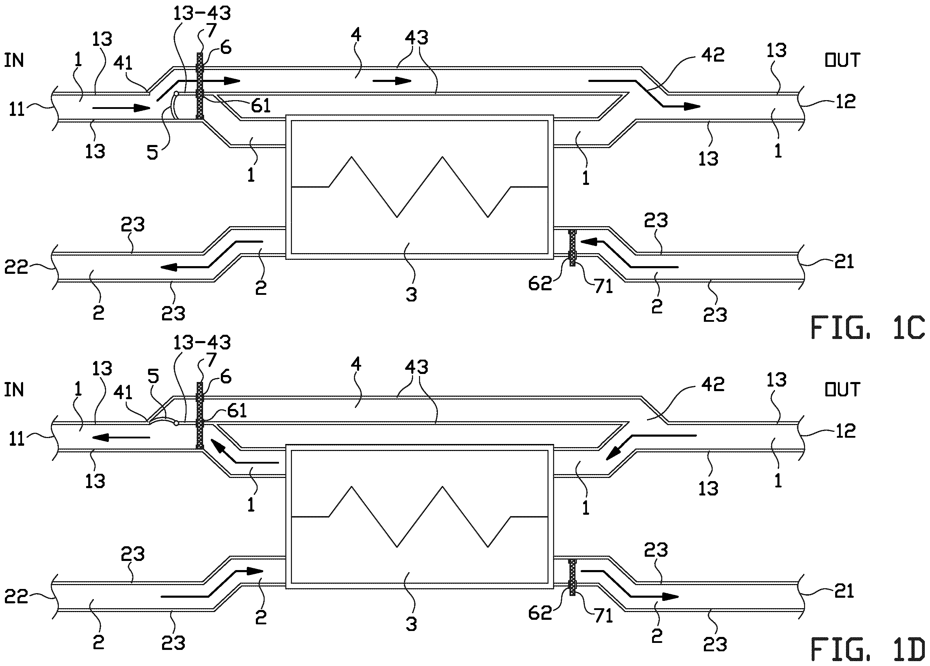

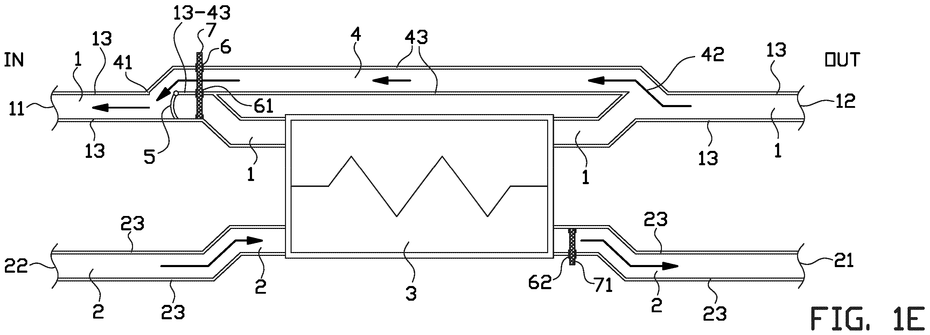

In accordance with the invention, the heat exchanger system is provided with means for regulating flow via the first main flow passage through the heat exchanger unit and for regulation flow through the bypass flow passage. In the embodiment depicted in Fig. 1 the means for regulating flow via the first main flow passage 1 through the heat exchanger unit 3 and for regulation of flow through the bypass flow passage 4 comprises a valve 5 configured for opening and closing the first main flow passage 1 as well as for opening and closing the bypass flow passage 4.

At least at one position up or downstream of the heat exchanger unit 3 said first main flow passage 1 and said bypass flow passage 4 extend for at least a portion adjacent to each other. This portion is indicated with A in Fig. 1A. In the embodiment depicted in Fig. 1 in portion A the wall of the first main flow passage 1 and the bypass flow passage 4 is formed by a common wall portion indicated with 13-43, and which separates the first main flow passage 1 from its bypass flow passage 4.

In this portion A wherein said first main flow passage 1 and said bypass flow passage 4 extend adjacent to each other said portion comprises a first opening 6 in the wall of the first main flow passage and/or the wall of the bypass flow passage. In the exemplary embodiment shown in Fig.1 the first opening is provided in the wall 43 of the bypass flow passage 4. Alternatively, in a different set up than the one shown in Fig. 1 and depending on the design of the heat exchanger system it also very well possible that the first opening is provided in the wall of the first main flow passage.

A second opening 61 opposite to the first opening 6 and between said first main flow passage 1 and said bypass flow passage 4 is provided in the wall portion A to allow removable insertion of a first filter element 7 through the cross-section of both the first main flow passage 1 and said bypass flow passage 4. In the embodiment shown in Fig. 1, this second opening is provided in shared wall 13-43.

In the embodiment shown in Fig. 1, the heat exchanger system also comprises an opening 62 in the wall 23 of the second main flow passage 2 to allow removable insertion of a second filter element 71 through the cross-section of the second main flow passage 2.

Fig. 1A shows the situation without the first and second filter elements inserted. Fig. 1B-E show the situation wherein said first filter element 7 is removably provided by insertion through the cross-section of both the first main flow passage 1 and said bypass flow passage 4 via said first 6 and second opening 61 so as to filter air flowing through the first main flow passage 1 and air flowing through the bypass flow passage 4, respectively. In other words, the first filter element functions, as a single filter unit, as an air filter for both the first main flow passage 1 as well as for the bypass flow passage 4. Likewise, Fig. 1B-E also show that the second filter element 71 is removably inserted in opening 62 in the wall 23 of the second main flow passage 2 so as to filter air flowing through the second main flow passage 2.

Although it is not required for purposes of the present invention and not shown in Fig. 1, it is possible to provide the second main flow passage 2 also with bypass flow passage with a first end branching from the second main flow passage at a first position up or downstream of the heat exchanger unit and a second end debouching back into the second main flow passage at a second, opposite position of the heat exchanger unit. In this case a second filter element may be provided in accordance with the provisions as explained for the first filter element, using the same configuration for the second main flow passage and its bypass flow passage as for the first main flow passage and its bypass flow passage.

Fig. 1B-E show four different modes of the depicted heat exchanger system.

In Fig. 1B extract air from the inside (IN) of a building is passed via the first main flow passage 1 to the outside (OUT) in direction of the arrows. Outside air is passed to the inside of the building via second main flow passage 2. Valve 5, which is in this case located upstream of the heat exchanger unit 3, closes the bypass flow passage 4, so that a part of the first main flow passage 1 and part of the second main flow passage 2 exchange heat with each other in the heat exchanger unit 3.

In fig 1C the flow directions correspond to that of Fig. 1B, except that the valve 5 now closes the first main flow passage 1 preventing air flow through the heat exchanger unit 3 via the first main flow passage 1. This may for instance be desired when the temperature in the building or a room thereof rises or lowers to an undesirable temperature and the outside temperature is at a more desirable temperature than the temperature at the inside. In this case the bypass flow passage 4 may be used to bypass the heat exchanger unit in order to prevent the supply of air at an undesirable temperature. The air now enters the bypass flow passage 4 branching of from the first main flow passage 1 upstream of the heat exchanger unit at bypass end 41 and debouching into the first main flow passage 1 again downstream of the heat exchanger unit 3 at the opposite bypass end 42. In this situation, no heat is effectively exchanged in the heat exchanger unit 3.

Fig. 1D and E basically correspond to Fig. 1B and C but the directions of flow are reversed. In other words, here extract air from the inside (IN) of a building is passed via the second main flow passage 2 to the outside (OUT) in direction of the arrows as would be the case if the orientation of installation with respect to the inside and outside of the building was reversed with respect to the installation shown in Fig. 1 B and C. Accordingly, in Fig. 1 D outside air is passed to the inside of the building via the first main flow passage 1. Extract air is passed from the inside to the outside of the building via the second main flow passage 2. In a heat exchanging mode as shown in Fig. 1 D, valve 5, which is in this case located downstream of the heat exchanger unit 3, closes the bypass flow passage 4, so that a part of the first main flow passage 1 and part of the second main flow passage 2 exchange heat with each other in the heat exchanger unit 3. In fig 1E the flow directions correspond to that of Fig. 1D, except that the valve 5 now closes the first main flow passage 1 preventing that air flows through the heat exchanger unit 3 via the first main flow passage 1. The air now enters the bypass flow passage 4 branching of from the first main flow passage 1 upstream of the heat exchanger unit at bypass end 42 and debouching into the first main flow passage 1 again downstream of the heat exchanger unit 3 at the opposite bypass end 41. In this situation, no heat is effectively exchanged in the heat exchanger unit 3.

As the comparison of Fig.1 B and C on one hand and Fig. 1 D and E on the other hand show, the heat exchange system according to the invention is designed such that it may be used as a left- or right-sided system without the need to rebuild or convert the configuration of the system, because the flow direction between the first and second main flow passage (1, 2) may suitably be reversed by taking appropriate measures that allow for regulation of the direction of flow. For this purpose, the heat exchanger system may suitably comprise a controller (not shown) configured for controlling the flow direction of the first and second main flow passage (1, 2) and possibly also the mechanism of action of valve 5, although this may also be realized using a different controller. This way the direction of flow of air inward or outward the building via the heat exchanger system in each main flow channel may be changed and the use of the bypass flow passage may be controlled when desired.

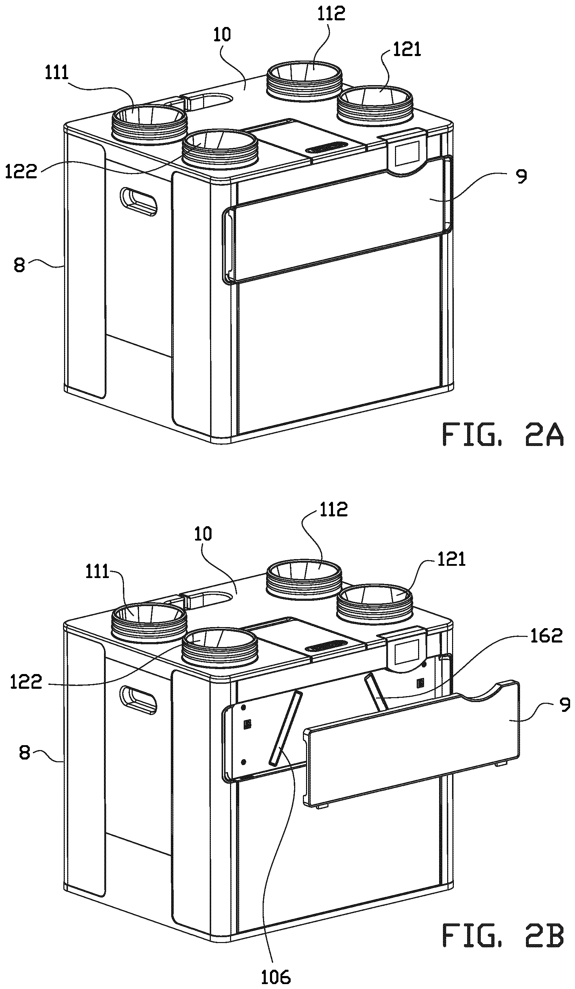

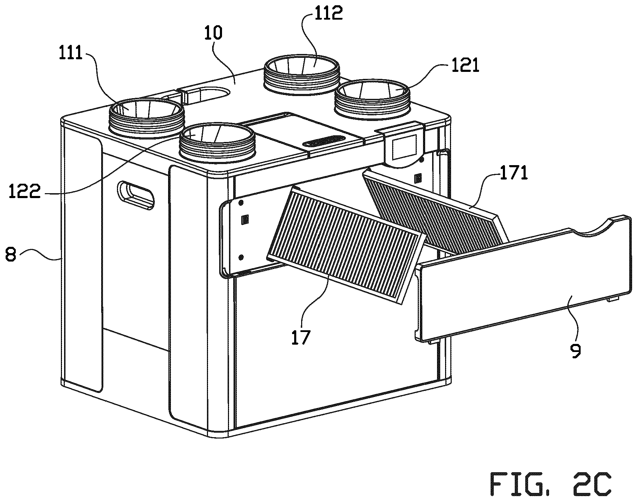

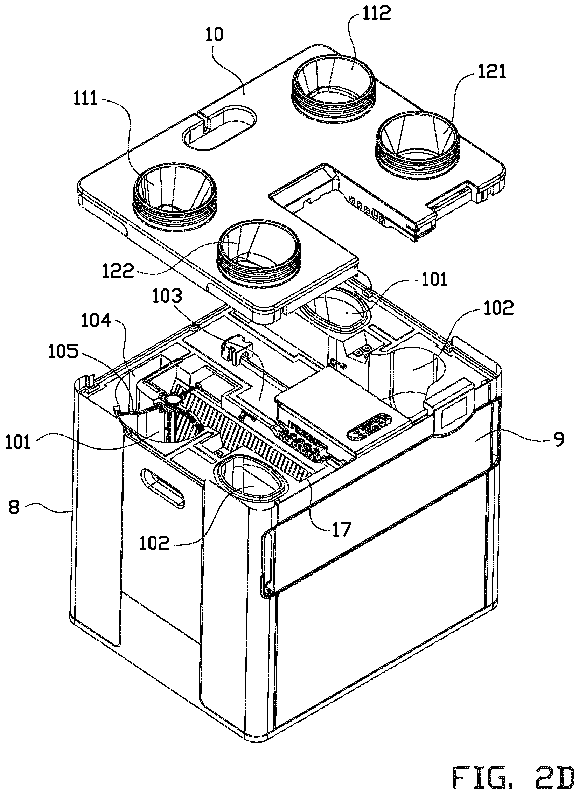

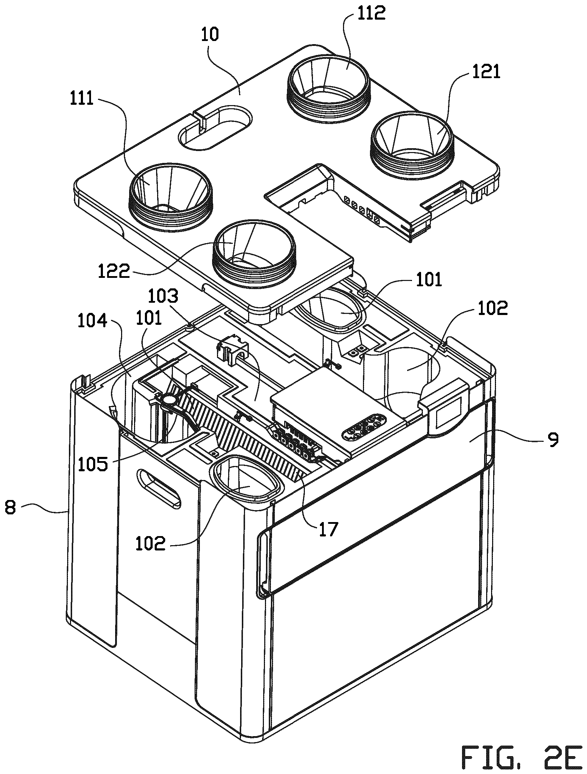

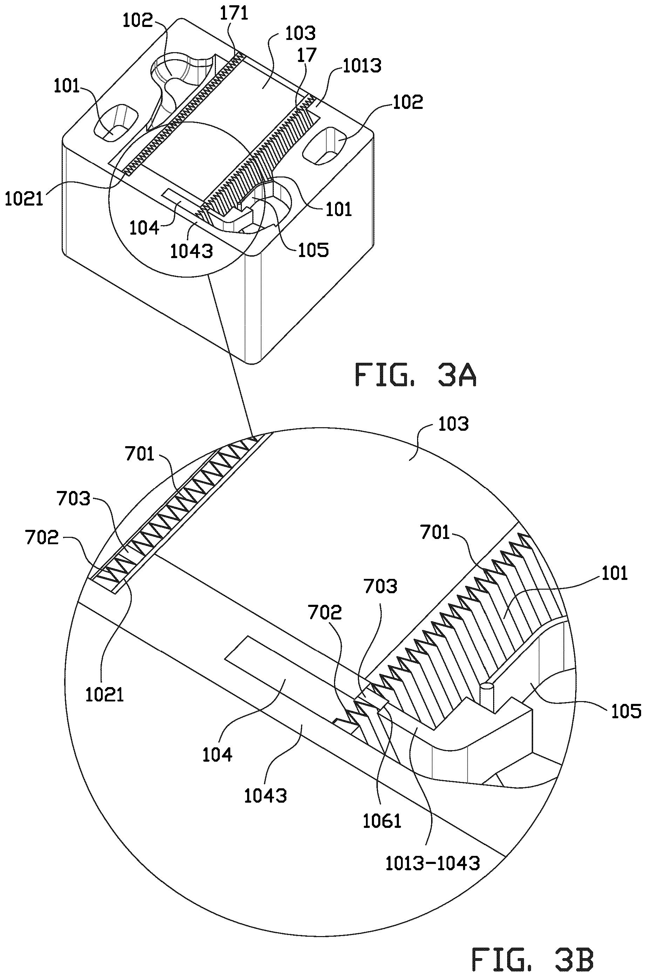

Fig. 3 A-E shows an exemplary heat exchanger system according to the invention in different representations. The principle set up is basically the same as in the schematic representation of Fig. 1, but in the embodiment of Fig.2 the first opening for inserting the first filter element is provided in the wall of the first main flow passage instead of the bypass flow passage. The parts of the heat exchanger system are contained in a housing 8. Said housing 8 comprises a removable lid 10 and a removable front panel 9.

Herein, the heat exchanger system comprises a first main flow passage 101 having a first air connection 111 on one end of the first main flow passage 101 and a second air connection 112 on the other end of the first main flow passage 101. First main flow passage 101 extends via the heat exchanger unit 103 that is provided between said first air connection 111 and second air connection 112.

Also a second main flow passage 102 is provided having a first air connection 121 on one end of the second main flow passage 102 and a second air connection 122 on the other end of the first main flow passage 102. Second main flow passage 102 also extends via said heat exchanger unit 103 that is provided between said first air connection 121 and second air connection 122. A part of the first main flow passage 101 and a part of the second main flow passage 102 are in heat exchanging relationship with each other via said heat exchanger unit 103.

The air connections 111, 112, 121, 122 suitably connect the heat exchanger system with the parts of a heat exchange ventilation system for use in a building or serve directly as inlet/outlet depending on the design thereof.

As can be seen best in Fig. 2B and 2C, upon removal of front panel 9 a first opening 106 in the first main flow passage 101 becomes accessible for insertion of filter 17. Likewise, an opening 162 in the second main flow passage 102 becomes accessible for insertion of filter 171.

As can be seen in Fig. 2D and E a bypass flow passage 104 is provided branching from the first main flow passage 101. A valve 105 is provided for opening and closing the first main flow passage 101 as well as for opening and closing the bypass flow passage 104. Valve 105 is designed as a single valve pivoting around an axis and configured to close the first main flow passage 101 in one position and to close the bypass flow passage 104 in a second position. This allows using a single control mechanism that only has to control the position of a single valve.

Fig. 2D shows the situation wherein the first main flow passage 101 is open for passing air through the heat exchanger unit 103 and the bypass flow passage 104 is closed by valve 105, so that the first main flow passage 101 and the second main flow passage 102 can exchange heat via heat exchanger unit 103. Fig. 2E shows the situation wherein the first main flow passage 101 is closed by valve 105 so that it does not pass air through the heat exchanger unit 103 and the bypass flow passage 104 is open, so that the heat exchanger unit 103 is bypassed and effectively no heat exchange takes place via the heat exchanger unit 103.

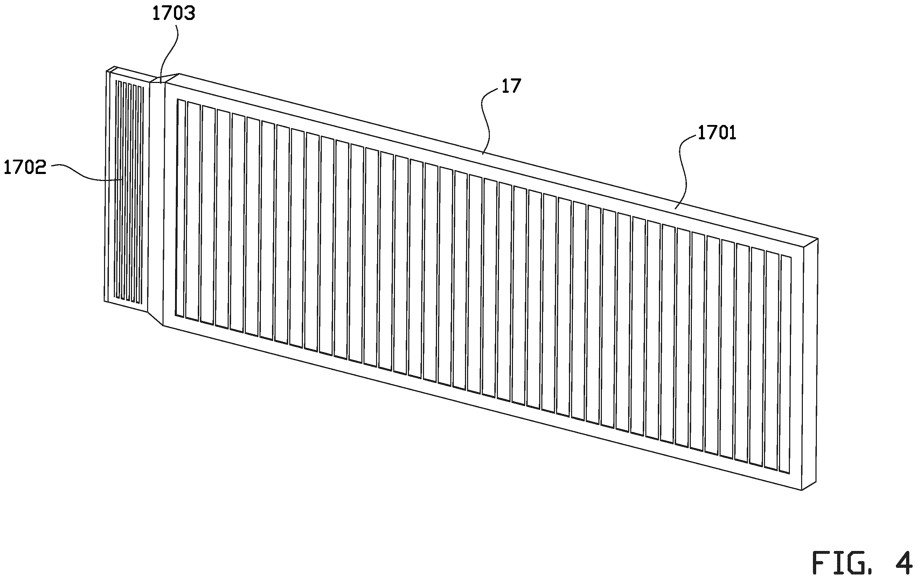

Details of the filter element 17 and how the filter element 17 can be inserted in the first main flow passage 101 and the bypass flow passage 104 are shown in Fig. 3 and 4. In the setup of Fig. 3 the valve 105 closes the first main flow channel 101 so that the bypass flow channel is open and may pass air around the heat exchanger unit 103. In Fig.3 and 4 a first filter element 17 is shown that comprises a first portion 701 configured to fit the cross-section of the first main flow passage 101 and a second portion 702 configured to fit the cross-section of the bypass flow passage 104, and wherein the first and second portion are separated by a seal portion 703.

Filter 17 is removably provided by insertion through the cross-section of both the first main flow passage 101 and said bypass flow passage 104 via a first opening in the wall 1013 of the first main flow passage 101 and a second opening 1061 in the wall 1013-1043 shared by the first main flow passage 101 and bypass flow passage 104. This way the filter element 17 extends with its first part 701 through the full cross-section of the first main flow passage 101, extending from wall 1013 to shared wall 1013-1043 and with its second part 702 through the full cross-section of the bypass flow passage 104, extending from shared wall 1013-1043 to bypass flow passage wall 1043, i.e. over the full cross-sections of both the first main flow passage 101 and the bypass flow passage 101. A seal portion 703 of filter 17 is configured to airtightly seal the second opening 1061 between said first main flow passage 101 and said bypass flow passage 104 when the first filter 703 is inserted so as to avoid leakage of air between the first main flow passage 101 and said bypass flow passage 104.

In the embodiment of Fig. 2-4, the cross-sections of the first main flow passage 101 and the bypass flow passage 104 are dimensioned differently, such that the dimensions of the bypass flow passage 104 in directions of insertion of the filter element 17 as well as the direction perpendicular thereto are smaller than the dimensions of the first main flow passage. Accordingly, the dimensions of the filter element 17 are configured accordingly to fit the cross-sections of the differently dimensioned first main flow passage 101 and bypass flow passage 104. In other words, the dimensions of the portion of the filter element 17 intended to filter air in the bypass flow passage 104, i.e. filter element portion 702, are smaller than the dimensions of the filter element portion 701 that is intended to filter air in the first main flow passage 101, both in the direction perpendicular to the direction of insertion as well as in the direction of insertion. This ensures foolproof insertion.

With regard to the second filter element 171, it is noted that although the heat exchanger system embodiment shown in Fig. 2-4 does not comprise a second bypass flow passage branching off from the second main flow passage 102, the second filter element may conveniently be designed exactly the same as the first filter element 17, i.e. with portions 701, 702 and 703. For this purpose, a recess 1021 may be provided in the wall of the second main flow passage opposite to the position of insertion, i.e. opening 162, so that the second filter element 171 rests in this recess 1021. This allows to use of a single design of filter element in the heat exchanger system.

## Claims

1. Heat exchanger system for use in a building ventilation system, comprising
a first main flow passage having a first air connection on one end of the first main flow passage and a second air connection on the other end of the first main flow passage, said first main flow passage being bounded by a wall;
a second main flow passage having a first air connection on one end of the second main flow passage and a second air connection on the other end of the second main flow passage, said second main flow passage being bounded by a wall;
a heat exchanger unit by means of which a part of the first main flow passage and part of the second main flow passage are in heat exchanging relationship with each other;
a first bypass flow passage with a first end branching from the first main flow passage at a first position up or downstream of the heat exchanger unit and a second end debouching back into the first main flow passage at a second, opposite position of the heat exchanger unit, said first bypass flow passage being bounded by a wall;
means for regulating flow via the first main flow passage through the heat exchanger unit and for regulating flow through the first bypass flow passage;
wherein at least at one position up or downstream of the heat exchanger unit said first main flow passage and said first bypass flow passage extend for at least a portion adjacent to each other; and
wherein in such a portion wherein said first main flow passage and said first bypass flow passage extend adjacent to each other, said portion comprises a first opening in the wall of the first main flow passage and/or the wall of the first bypass flow passage and a second opening opposite to the first opening and between said first main flow passage and said first bypass flow passage to allow removable insertion of a first filter element through the cross-section of both the first main flow passage and said first bypass flow passage.

2. Heat exchanger system according to claim 1, wherein said first filter element is removably provided by insertion through the cross-section of both the first main flow passage and said first bypass flow passage via said first and second opening and configured to filter air flowing through the first main flow passage and/or air flowing through the first bypass flow passage.

3. Heat exchanger system according to claim 1 or 2, wherein said first opening is provided in the wall of the first main flow passage.

4. Heat exchanger system according to any of the previous claims, wherein in said portion wherein said first main flow passage and said first bypass flow passage extend adjacent to each other the walls of the first main flow passage and the first bypass flow passage in said portion abut each other to form an abutted wall portion and wherein said second opening is provided in said shared wall portion.

5. Heat exchanger system according to any of the previous claims 1 to 3, wherein in said portion wherein said first main flow passage and said first bypass flow passage extend adjacent to each other the wall of the first main flow passage and the first bypass flow passage is formed by a common wall portion separating the first main flow passage from the first bypass flow passage, wherein said second opening is provided in said common wall.

6. Heat exchanger system according to any of the previous claims, wherein said means for regulating flow via the first main flow passage through the heat exchanger unit and for regulation flow through the first bypass flow passage comprises one or more valve configured for opening and closing the first main flow passage as well as for opening and closing the first bypass flow passage.

7. Heat exchanger system according to claim 6, wherein said means for regulating flow via the first main flow passage through the heat exchanger unit and for regulation flow through the first bypass flow passage comprises a single valve pivoting around an axis and configured to close the first main flow passage in one position and to close the first bypass flow passage in a second position.

8. Heat exchanger system according to any of the previous claims, wherein the first filter element comprises a first portion configured to fit the cross-section of the first main flow passage and a second portion configured to fit the cross-section of the first bypass flow passage, and wherein the first and second portion are separated by a seal portion configured to seal the second opening between said first main flow passage and said first bypass flow passage when the first filter element is inserted.

9. Heat exchanger system according to claim 8, wherein the cross-sections of the first main flow passage and the first bypass flow passage are dimensioned differently, such that the dimensions of the flow passage the most distance from the position of insertion of the first filter element are smaller than the dimensions of the flow passage closer to the position of insertion of the first filter element.

10. Heat exchanger system according to any of the previous claims, comprising an opening in the wall of the second main flow passage to allow removable insertion of a second filter element through the cross-section of the second main flow passage.

11. Heat exchanger system according to any of the previous claim 10, wherein said second filter element is removably inserted in said opening in the wall of the second main flow passage and configured to filter air flowing through the second main flow passage.

12. Heat exchange ventilation system for use in a building comprising the heat exchanger system according to any of the claims 1 to 11.

13. Building comprising the heat exchange ventilation system according to claim 12.

14. Filter element, for use in the heat exchanger system according to any of the claims 1 to 11, wherein the filter element is configured for removable insertion into said heat exchanger system through the cross-section of both said first main flow passage and said bypass flow passage via said first and second opening and for filtering air flowing through the first main flow passage and air flowing through the bypass flow passage; and wherein the filter element comprises a first portion configured to fit the cross-section of the first main flow passage and a second portion configured to fit the cross-section of the bypass flow passage, and wherein the first and second portion are separated by a seal portion configured to seal the second opening between said first main flow passage and said bypass flow passage when the first filter element is inserted.

15. Filter element according to claim 14, wherein the cross-sections of the first main flow passage and the bypass flow passage are dimensioned differently, such that the dimensions of the flow passage the most distance from the position of insertion of the filter element are smaller than the dimensions of the flow passage closer to the position of insertion of the filter element, and that the dimensions of the filter element are configured accordingly to fit the cross-sections of the differently dimensioned first main flow passage and bypass flow passage.

## Amended claims

### Amended claims in accordance with Rule 137(2) EPC.

1. Heat exchanger system for use in a building ventilation system, comprising
a first main flow passage (1, 101) having a first air connection (11, 111) on one end of the first main flow passage (1, 101) and a second air connection (12, 112) on the other end of the first main flow passage (1, 101), said first main flow passage (1, 101) being bounded by a wall (13, 1013);
a second main flow passage (2, 102) having a first air connection (21, 121) on one end of the second main flow passage (2, 102) and a second air connection (22, 122) on the other end of the second main flow passage (2, 102), said second main flow passage (2, 102) being bounded by a wall (23);
a heat exchanger unit (3, 103) by means of which a part of the first main flow passage (1, 101) and part of the second main flow passage (2, 102) are in heat exchanging relationship with each other;
a first bypass flow passage (4, 104) with a first end (41, 1041) branching from the first main flow passage (1, 101) at a first position up or downstream of the heat exchanger unit (3, 103) and a second end (42, 1042) debouching back into the first main flow passage (1, 101) at a second, opposite position of the heat exchanger unit (3, 103), said first bypass flow passage (4, 104) being bounded by a wall (43, 1043);
means (5, 105) for regulating flow via the first main flow passage (1, 101) through the heat exchanger unit (3, 103) and for regulating flow through the first bypass flow passage (4, 104); **characterized in that**
at least at one position up or downstream of the heat exchanger unit (3, 103) said first main flow passage (1, 101) and said first bypass flow passage (4, 104) extend for at least a portion adjacent to each other; and
wherein in such a portion wherein said first main flow passage (1, 101) and said first bypass flow passage (4, 104) extend adjacent to each other, said portion comprises a first opening (6, 106) in the wall of the first main flow passage (1, 101) and/or the wall of the first bypass flow passage (4, 104) and a second opening (61, 1061) opposite to the first opening (6, 106) and between said first main flow passage (1, 101) and said first bypass flow passage (4, 104) to allow removable insertion of a first filter element (7, 17) through the cross-section of both the first main flow passage (1, 101) and said first bypass flow passage (4, 104).

2. Heat exchanger system according to claim 1, wherein said first filter element (7, 17) is removably provided by insertion through the cross-section of both the first main flow passage (1, 101) and said first bypass flow passage (4, 104) via said first (6, 106) and second (61, 1061) opening and configured to filter air flowing through the first main flow passage (1, 101) and/or air flowing through the first bypass flow passage (4, 104).

3. Heat exchanger system according to claim 1 or 2, wherein said first opening (6, 106) is provided in the wall (13, 1013) of the first main flow passage (1, 101).

4. Heat exchanger system according to any of the previous claims, wherein in said portion wherein said first main flow passage (1) and said first bypass flow passage (4) extend adjacent to each other the walls (13, 43) of the first main flow passage (1) and the first bypass flow passage (4) in said portion abut each other to form an abutted wall portion and wherein said second opening (61) is provided in said shared wall portion.

5. Heat exchanger system according to any of the previous claims 1 to 3, wherein in said portion wherein said first main flow passage (1, 101) and said first bypass flow passage (4, 104) extend adjacent to each other the wall of the first main flow passage (1, 101) and the first bypass flow passage (4, 104) is formed by a common wall portion (13-43, 1013-1043) separating the first main flow passage (1, 101) from the first bypass flow passage (4, 104), wherein said second opening (61, 1061) is provided in said common wall.

6. Heat exchanger system according to any of the previous claims, wherein said means (5, 105) for regulating flow via the first main flow passage (1, 101) through the heat exchanger unit (3, 103) and for regulation flow through the first bypass flow passage (4, 104) comprises one or more valve configured for opening and closing the first main flow passage (1, 101) as well as for opening and closing the first bypass flow passage.

7. Heat exchanger system according to claim 6, wherein said means (5, 105) for regulating flow via the first main flow passage (1, 101) through the heat exchanger unit (3, 103) and for regulation flow through the first bypass flow passage (4, 104) comprises a single valve (5, 105) pivoting around an axis and configured to close the first main flow passage (1, 101) in one position and to close the first bypass flow passage (4, 104) in a second position.

8. Heat exchanger system according to any of the previous claims, wherein the first filter element (17) comprises a first portion (701) configured to fit the cross-section of the first main flow passage (101) and a second portion (702) configured to fit the cross-section of the first bypass flow passage (104), and wherein the first and second portion are separated by a seal portion (703) configured to seal the second opening (1061) between said first main flow passage (101) and said first bypass flow passage (104) when the first filter element (17) is inserted.

9. Heat exchanger system according to claim 8, wherein the cross-sections of the first main flow passage (101) and the first bypass flow passage (104) are dimensioned differently, such that the dimensions of the flow passage the most distance from the position of insertion of the first filter element (17) are smaller than the dimensions of the flow passage closer to the position of insertion of the first filter element (17).

10. Heat exchanger system according to any of the previous claims, comprising an opening (62, 162) in the wall (23) of the second main flow passage (2, 102) to allow removable insertion of a second filter element (71, 171) through the cross-section of the second main flow passage (2, 102).

11. Heat exchanger system according to any of the previous claim 10, wherein said second filter element (71, 171) is removably inserted in said opening (62, 162) in the wall (23) of the second main flow passage (2, 102) and configured to filter air flowing through the second main flow passage (2, 102).

12. Heat exchange ventilation system for use in a building comprising the heat exchanger system according to any of the claims 1 to 11.

13. Building comprising the heat exchange ventilation system according to claim 12.
